Europäisches Patentamt

European Patent Office

Office européen des brevets

(11) Numéro de publication: **0 136 191**
A1

## (12) DEMANDE DE BREVET EUROPEEN

(21) Numéro de dépôt: 84401238.5

(22) Date de dépôt: 15.06.84

(51) Int. Cl.⁴: **B 29 B 7/00,** C 08 J 9/30, C 08 J 9/12

(30) Priorité: 15.06.83 FR 8309896

(43) Date de publication de la demande: 03.04.85 Bulletin 85/14

(84) Etats contractants désignés: **DE GB IT NL**

(71) Demandeur: **Rey, née Desgranges, Annie, 120 rue Aristide Briand, F-16100 Cognac (FR)**

(72) Inventeur: **Rey, née Desgranges, Annie, 120 rue Aristide Briand, F-16100 Cognac (FR)**

(74) Mandataire: **Lemoine, Michel et al, Cabinet Michel Lemoine et Bernasconi 13 Boulevard des Batignolles, F-75008 Paris (FR)**

(54) **Procédé de fabrication de mousses liquides de résines thermodurcissables, notamment de polyuréthane, et mousses obtenues.**

㊌ Le procédé est caractérisé en ce que l'on fait passer sous pression la résine polyuréthane et un gaz inerte dans un mélangeur statique par division. Le procédé est également applicable aux résines polyester insaturé, époxy et phénoliques.

EP 0 136 191 A1

Procédé de fabrication de mousses liquides de résines thermodurcissables, notamment de polyuréthane, et mousses obtenues.

La présente invention a trait à un procédé de fabrication de mousses liquides de résines thermodurcissables et notamment de polyuréthane ainsi qu'aux mousses liquides obtenues. Ces mousses liquides sont destinées à être ensuite polymérisées ou thermodurcies pour réaliser des matériaux synthétiques alvéolaires dont la densité est de préférence inférieure à 900 g/l, par exemple par moulage.

Jusqu'à présent, lorsque l'on désire fabriquer des éléments en matière synthétique alvéolaire, tels que par exemple des mousses polyuréthane, on utilise des agents moussants chimiques qui permettent la formation de bulles de gaz à température élevée, provoquant ainsi la formation d'une mousse expansée pendant la polymérisation qui doit s'effectuer dans un moule convenable. De tels procédés présentent cependant de nombreux inconvénients, en particulier la nécessité d'utiliser des agents moussants particuliers, difficiles à manier car ils exercent une forte poussée sur les parois des moules lors de l'expansion.

Afin de remédier à ces inconvénients, on a déjà prévu de réaliser des mousses liquides de résines polyester insaturé par incorporation mécanique d'un gaz à la résine liquide à l'intérieur d'une turbine. Un tel procédé est cependant complexeet nécessite un matériel onéreux et difficile à conduire.

On connaît déjà des dispositifs statiques, comprenant généralement des chambres à billes pour produire des mousses par passage de liquide et de gaz dans la chambre mais ces dispositifs ne sont applicables qu'à des substances moussant très facilement, telles que des solutions aqueuses de faible viscosité. De tels dispositifs sont, par exemple, décrits dans les brevets français 1 510 390, 2 088 553 et 2 321 218.

Il en résulte qu'en pratique on se contente d'utiliser des procédés dans lesquels on provoque une réaction exothermique entre les constituants, entraînant une vaporisation formant la mousse, de l'air pouvant être injecté dans le réacteur pour véhiculer la mousse déjà formée, comme décrit par exemple dans le brevet britannique 913 529.

La présente invention se propose de remédier à ces inconvénients et de fournir un procédé de formation de mousses liquides de résines thermodurcissables visqueuses et notamment de polyuréthane, qui soit simple, pratique, peu onéreux et de réglage facile.

Un autre objectif de l'invention est de fournir des mousses liquides de telles résines qui soient stables, faciles à mettre en oeuvre et d'un prix de revient économique.

Un autre objectif encore de l'invention est de fournir des mousses n'exerçant que de faibles poussées sur les moules lors de la polymérisation et permettant donc d'utiliser des moules légers et économique.

L'invention a pour objet un procédé de fabrication de mousses liquides de résine thermodurcissable, par incorporation d'un gaz, ou mélange de gaz, inerte dans la résine liquide, caractérisé en ce que l'on ajoute à la résine un ou des agents émulsifiants et stabilisants et que l'on fait passer sous pression la résine, de préférence une résine polyuréthane, ainsi que le gaz sous pression dans un mélangeur statique par division dans lequel on réalise le mélange interne du gaz et de la résine, puis que l'on libère le mélange à la pression atmosphérique pour provoquer la formation de la mousse.

Les mélangeurs statiques par division, dans le sens de la présente invention, comprennent les mélangeurs d'un type en soi déjà connu, utilisés jusqu'à présent pour réaliser des mélanges entre liquides, comprenant une première entrée et au moins une deuxième entrée, un système de chicanes divisant les flux liquides et facilitant le mélange, et une sortie pour le mélange.

Cependant, on peut aussi utiliser une simple grille à fines mailles, telle que par exemple les filtres métalliques usuels utilisés sur les circuits de résine sous pression pour filtrer les impuretés, en amenant en amont du filtre un flux de résine sous pression dans lequel on injecte le gaz sous pression.

L'invention repose sur la constatation surprenante qu'il est ainsi possible d'obtenir des émulsions liquide-gaz formant des mousses de faible densité à partir de résines qui étaient considérées comme se prêtant particulièrement mal à la dissolution de gaz, au point que toute idée de fabrication mécanique de ces mousses avait été écartée par la technologie en question, sauf dans le cas particulier des résines polyesters où , comme précité, il avait été prévu un dispositif mécanique particulièrement complexe, à savoir une turbine.

Conformément à l'invention, on introduit dans le mélangeur statique, la résine à une pression d'entrée suffisante pour permettre un bon écoulement de la résine liquide dans les chicanes du mélangeur, malgré l'importante perte de charge de celui-ci, cette pression dépendant de la viscosité du liquide et croissant avec elle, et l'on introduit le gaz à une pression voisine suffisante pour obtenir le débit de gaz voulu.

La pression utilisée, pour des produits ayant une viscosité allant de 0,2 à 300 poises et de préférence de 4 à 20 poises, est avantageusement comprise entre 5 et 300 bars et de préférence entre 10 et 100 bars.

La pression du gaz est réglée, si besoin par tâtonnement, de façon à obtenir le débit désiré de gaz pénétrant dans la résine, étant entendu que d'une façon générale, au-delà d'une pression limite de gaz, dépendant notamment de la viscosité du liquide et de sa capacité de dissolution, il n'est plus possible d'augmenter la teneur en gaz de la mousse.

Comme précité, la résine a reçu une quantité efficace d'un agent émulsifiant. Un tel agent peut notamment être un agent tensio-actif usuel soluble dans la résine considérée, par exemple à base de silicones. En outre, elle a reçu une quantité efficace d'un agent stabilisant l'émulsion , qui peut être, le cas échéant, l'agent tensio-actif émulsifiant.

La résine liquide, qui peut déjà comporter des additifs nécessaires au thermodurcissage, chemine à travers le mélangeur en se divisant en une grande quantité de flux individuels éventuellement divisés à nouveau, tout en dissolvant progressivement le gaz injecté dans le mélangeur et ceci jusqu'à la sortie où, rejoignant la pression atmosphérique, le mélange se transforme en mousse par détente du gaz dissous.

L'invention est particulièrement applicable à la formation de mousses liquides de résines polyuréthane. Elle peut cependant être appliquée à d'autres matières telles que les résines polyester, époxy, et phénoliques.

Les résines peuvent être purement liquides ou chargée de charges minérales organiques, fibreuses ou pulvérulentes ou autres.

5 0136191

La densité de la mousse liquide, et donc de la matière synthétique polymérisée expansée finalement désirée, peut être avantageusement de l'ordre de 500 g par kg mais peut varier autour de cette valeur en fonction d'une part des pressions choisies et d'autre part des débits respectifs de gaz et de résine. Bien entendu, cette densité peut être très différente si la résine a reçu une charge.

Le gaz utilisé peut avantageusement être de l'azote.

Les mousses utilisées peuvent ensuite être durcies, par exemple dans un procédé de moulage ou de toute autre manière. En particulier, l'invention se prête à la fabrication en continu ou en discontinu de toutes quantités de mousses.

D'autres avantages et caractéristiques de l'invention apparaîtront à la lecture de la description suivante, faite à titre d'exemples non limitatifs.

Exemple 1. La résine utilisée est une résine polyuréthane à base d'un polyol vendu sous la dénomination CARADOL 520 par la société française SHELL CHIMIE et d'un isocyanate vendu sous la dénomination CARADATE 30 par cette société, dans le rapport 100/135 en poids. Avant la composition de la résine, le polyol a été débarrassé de sa teneur en eau par tamisage moléculaire puis a reçu l'adjonction d'un émulsifiant à base de silicone dans une proportion de 0,5 % du poids de résine.

Le polyol et l'isocyanate sont adressés séparément par leurs pompes doseuses respectives dans les proportions précitées, à une simple chambre de mélange dans laquelle débouche également l'arrivée de gaz. Un catalyseur usuel est également mélangé à la résine. La viscosité du mélagne est d'environ 6 poises.

La pression des deux composants liquides est de 40 bars. Le débit de résine observé est de 6 kg/mn. L'azote est introduit à une pression suffisante pour obtenir un débit de 20 litres/mn.

Le mélangeur statique est une mélangeur du commerce, de 30 cm de long et 25 cm de diamètre.

Il se forme à la sortie du mélangeur une émulsion constituant une mousse stable liquide ayant une densité de 500 g/l. La mousse reste stable pendant au moins 30 mn.

La mousse a été disposée à l'intérieur d'une moule puis démoulée après polymérisation à température ambiante pendant 30 mn. Le produit expansé dur obtenu a une densité de 500 g/l.

Exemple 2. La résine utilisée est un polyester insature de composition suivante : propylène-glycol : 29,06 kg - diethylène-glycol : 12,16 kg- anhydride maléique : 24,43 kg - anhydride phtalique 35,37 kg. Le mélange est dilué dans du styrène à raison de 40 % de styrène par rapport au total, avec adjonction de 0,5% en poids, d'une tensio-actif à base de silicone. La viscosité du mélange est d'environ 5 poises.

La résine est adressée par une pompe à 70 bars à travers une canalisation, ayant un diamètre interne de 6 mm, dans laquelleon introduit le gaz. Le débit de résine est de 5 kg/mn et le débit d'azote résultait d'une pression d'azote de 30 bars.L'ensemble gaz-résine passe ensuite à travers un filtre métallique et arrive dans une simple chambre de mélange dans laquelle on introduit un catalyseur usuel, suivie d'un mélangeur statique à spirales du commerce.

A la sortie du mélangeur se forme une mousse liquide, ayant une densité de 550 g/l, qui est stable pendant au moins 30 mn. La mousse a été coulée dans un moule de panneau plan comprenant un renfort en fibres de verre puis polymérisée à température ambiante en 90 mn.

7

REVENDICATIONS

1. Procédé de fabrication de mousses liquides de résine thermodurcissables, par incorporation d'un gaz ou mélange de gaz inerte dans la résine liquide, caractérisé en ce que l'on ajoute à la résine un ou des agents émulsifiants et stabilisants et que l'on fait passer la résine sous pression ainsi que le gaz sous pression dans un mélangeur statique par division dans lequel on réalise le mélange intime du gaz et de la résine puis que l'on libère le mélange à la pression atmosphérique pour provoquer la formation de la mousse.

2. Procédé selon la revendication 1, caractérisé en ce que l'on utilise une résine polyuréthane.

3. Procédé selon la revendication 2, caractérisé en ce que, dans le cas où la résine contient de l'eau, on élimine préalablement cette teneur en eau.

4. Procédé selon l'une des revendications 2 et 3, caractérisé en ce que l'on amène séparément les composants de la résine pour les mélanger au niveau du mélangeur statique par division.

5. Procédé selon la revendication 1, caractérisé en ce que l'on utilise une résine choisie dans le groupe des résines polyester insaturé, époxy et phénoliques.

6. Procédé selon l'une quelconque des revendications 1 à 5, caractérisé en ce que l'on utilise, pour les produits ayant une viscosité allant de 0,2 à 300 poises, une pression comprise entre 5 et 300 bars et notamment entre 10 et 100 bars, la pression croissant avec la viscosité.

7. Mousse liquide de résine obtenue par le procédé selon l'une quelconque des revendications 1 à 6.

0136191

**Office européen des brevets**

**RAPPORT DE RECHERCHE EUROPEENNE**

Numéro de la demande

EP  84 40 1238

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 017 298 (LECHLER CHEMIE)<br><br>* revendications 1-3; page 5, lignes 6-20; figure * | 1,2,4,7 | B 29 B 7/00<br>C 08 J 9/30<br>C 08 J 9/12 |
| D,A | FR-A-2 088 553 (MIDLAND INSULATORS et al.)<br>* revendication 1; page 2, ligne 27 - page 3, ligne 19 * | 1,7 | |
| D,A | FR-A-1 510 390 (ICI)<br>* résumé; page 2, colonne de gauche, ligne 29 - colonne de droite, ligne 5; page 4, colonne de gauche, lignes 14-31 * | 1,5-7 | |
| A | US-A-3 926 700 (H.S. HOPKINS et al.)<br>* revendications 1-4; figure 3 * | 1-3 | **DOMAINES TECHNIQUES RECHERCHES (Int. Cl.4)** |
| A | GB-A-1 333 088 (DUNLOP)<br>* revendications 1,15,16 * | 1,2 | C 08 J<br>B 29 B |

Le présent rapport de recherche a été établi pour toutes les revendications

| Lieu de la recherche | Date d'achèvement de la recherche | Examinateur |
|---|---|---|
| LA HAYE | 01-10-1984 | HALLEMEESCH A.D. |